# EUROPEAN PATENT SPECIFICATION

(11) **EP 0 795 686 B1**
(45) Date of publication and mention of the grant of the patent: **04.10.2001**
(21) Application number: 97104075.3
(22) Date of filing: 11.03.1997
(51) Int. Cl.: F02D 41/14, G01M 15/00, F02D 41/34

(54) **Apparatus for detecting misfires in an electronic controlled diesel engine**
Vorrichtung zur Erkennung von Verbrennungsaussetzern bei einem elektronisch geregelten Dieselmotor
Dispositif pour détecter des valés de combustion dans un moteur diesel à commande électronique

(30) Priority: 12.03.1996 JP 5473296
(43) Date of publication of application: 17.09.1997
(73) Proprietor: TOYOTA JIDOSHA KABUSHIKI KAISHA, Aichi-ken (JP)
(72) Inventor: Iwai, Akira, Toyota-shi, Aichi-ken 473 (JP); Hidaka, Shigeki, Kariya-shi, Aichi-ken 448 (JP)
(74) Representative: Pellmann, Hans-Bernd, Dipl.-Ing.

(56) References cited:
- EP-A- 0 437 057
- EP-A- 0 611 882
- US-A- 5 174 261
- US-A- 5 263 453
- US-A- 5 493 901

## Description

### TECHNICAL FIELD TO WHICH THE INVENTION BELONGS

The present invention relates to electronic controlled engines that control fuel injection with a computer in accordance with the operating state of the engine. More particularly, the present invention pertains to an apparatus for detecting misfires in a diesel engine.

### RELATED BACKGROUND ART

Diesel engines are generally provided with a fuel injection apparatus for injecting fuel into a combustion chamber. A typical injection apparatus includes a fuel injection nozzle and a fuel injection pump. The fuel injection pump, which is operated in cooperation with the engine, sends pressurized fuel to the injection nozzle. The fuel is then injected into the combustion chamber through the nozzle. The amount of fuel injected from the nozzle must be controlled in accordance with the operating state of the engine.

Electronically controlled diesel engine systems control the injection amount of the fuel in accordance with the operating state of the engine. Such a system typically includes an injection pump and a computer, which controls the pump. The injection pump includes a cam mechanism and a plunger. The cam mechanism includes a drive shaft driven by the crankshaft of the engine. The plunger is moved reciprocally by the cam mechanism. The movement of the plunger causes highly pressurized fuel to be discharged from the injection pump to the injection nozzle. The highly pressurized fuel is then injected into a combustion chamber through an injection nozzle.

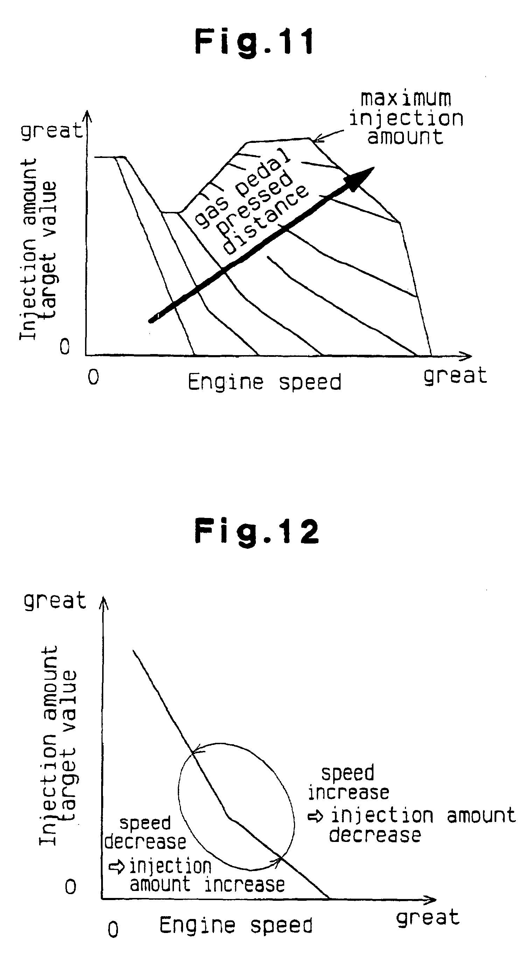

The computer computes a target value for the injection amount of fuel based on the position of the gas pedal and the speed of the crankshaft (engine speed), by referring to function data shown in Figs. 11 and 12, which have so-called governor characteristics. The function data having the governor characteristics causes the fuel injection amount to decrease as the engine speed increases when the position of the gas pedal is constant. A target value of fuel injection amount computed by referring to function data having the governor characteristics stabilizes the engine speed. The computer controls the injection pump based on the computed target amount of fuel discharged from the injection pump, that is, the amount of fuel injected through the injection nozzle.

A speed sensor provided in the injection pump detects the engine speed. The speed sensor includes a pulser, which is installed on the drive shaft, and a pickup coil, which is opposed to the pulser. The pulser is disk-like and has a plurality of indicia, which are projections projecting from its circumferential surface. A predetermined interval is provided between each adjacent pair of the projections. As the pulser rotates integrally with the drive shaft, each projection passes by the pickup coil. The pickup coil outputs a pulse signal as each projection passes by. The position at which each pulse signal is outputted during a single rotation of the pulser accurately corresponds to the operating state of the engine, or the suction, compression, combustion, and exhaust strokes that are executed during two rotations of the crankshaft. In other words, the sensor indirectly detects the rotational angle of the crankshaft, . or the changes in the crank angle, based on the rotation of the drive shaft.

In such an electronically controlled diesel engine, it is necessary to prevent undesirable engine emissions that may be caused by wear or by malfunctions of certain parts in the engine. Engine misfire is one of the factors that may cause undesirable engine emissions. Misfire refers to a state in which the injected fuel does not burn properly in the combustion chamber. Accordingly, it is necessary to accurately detect misfires to prevent undesirable engine emissions. The accurate detection requires determining in which cylinder or cylinders in the engine a misfire has occurred.

Document US 5 263 453 discloses an apparatus for detecting misfire in internal combustion engines for vehicles, wherein the operation conditions of the vehicle and the engine are monitored. The rotational speed of the engine is detected and the change quantity of the rotational speed based on the output signal from the rotational speed detecting means is computed. In consideration of the load of the engine which forms the basis for a correction coefficient to correct misfire determination the change quantity of the rotational speed of the engine is compared with a reference value to determine whether a misfire has occurred. Under predetermined operating conditions, misfire determination is inhibited to avoid an incorrect misfire determination.

Japanese Unexamined Patent Publication 63-154841 describes a method for detecting misfires in an electronic controlled diesel engine. In this method, misfires are detected based on successive pulse signals that are outputted by the pickup coil. More specifically, the lengths of time between each pair of adjacent pulse signals in a series of successive pulse signals corresponding to a combustion stroke are computed. The length of time between a pulse and the subsequent pulse is hereinafter referred to as a pulse time. A pulse time is correlated with the engine speed. Each computed pulse time is compared with a predetermined reference value to determine whether a misfire has taken place. That is, the occurrence of misfires is judged from changes in the pulse times under the assumption that the engine speed slows down when there is a misfire.

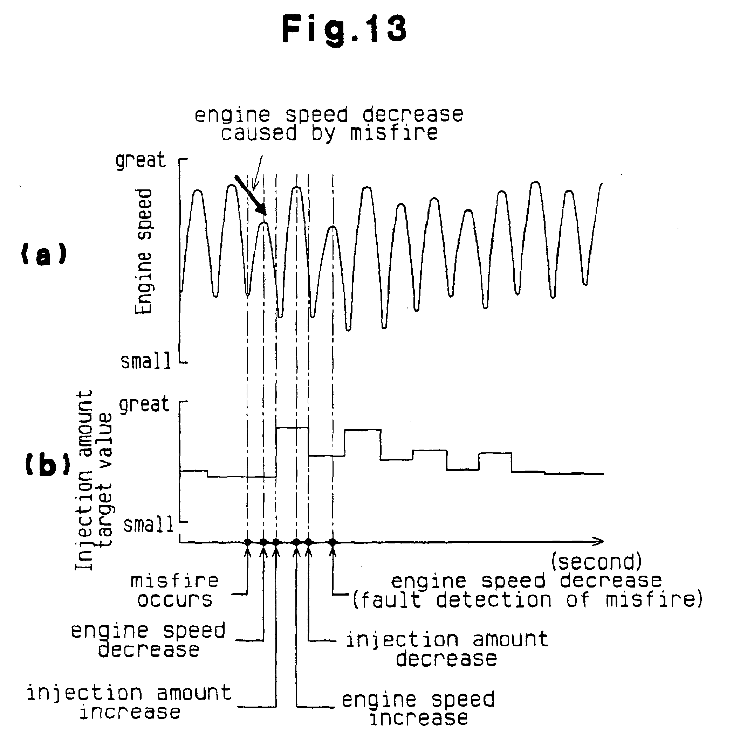

However, the employment of the above detecting method has a disadvantage. In a diesel engine, a decrease of the engine speed caused by a misfire is small compared to that of a gasoline engine. Further, as shown in Fig. 13(a), if a misfire causes the engine speed to drop, the engine speed is apt to drop again right after the speed drop caused by the misfire. This may results in a false detection of a misfire. A reason for the decrease in the engine speed after a misfire is that the injection fuel amount target value is computed based on the function data having the governor characteristics shown in Figs. 11 and 12. In the function data, the injection amount target value decreases as the engine speed increases. As shown in Fig. 12, when the position of the gas pedal is constant, the fuel injection amount is reduced as the engine speed increases, and, in return, the fuel injection amount is increased as the engine speed decreases. Therefore, as shown in Figs. 13(a) and 13(b), if a misfire causes the engine speed to decrease, the fuel injection amount is increased immediately thereafter. Accordingly, the engine speed is increased. However, in response to the increase in the engine speed, the fuel injection amount is reduced. This lowers the engine speed, and may therefore cause a false detection of a misfire.

In diesel engines, the fuel injection amount must be controlled in accordance with the engine speed fluctuations by using the above described governor characteristics. Therefore, in order to accurately detect misfires in a diesel engine, the fluctuations of the engine speed caused by the governor characteristics must be taken into consideration.

### DISCLOSURE OF THE INVENTION

Accordingly, it is an object of the present invention to provide an apparatus for detecting misfires in an electronic controlled diesel engine that controls the amount of fuel injection based on the governor characteristics.

This object is accomplished according to the present invention by an apparatus for detecting misfires in an electronic controlled diesel engine as set forth in the appended claims.

In greater detail, the present invention provides an apparatus for detecting misfire in an electronic controlled diesel engine. The engine has a crankshaft, a combustion chamber, an injection nozzle for injecting fuel into the combustion chamber, and an injection pump driven by the crankshaft and used to pressurize and discharge the fuel toward the nozzle. The engine performs combustion of the fuel to rotate and drive the crankshaft. The apparatus includes means for detecting the rotating speed of the crankshaft , means for controlling the injection pump to adjust the amount of the fuel to be injected from the injection nozzle into the combustion chamber , the controlling means controlling the injection pump so that the amount of the fuel to be discharged from the injection pump to the injection nozzle decreases in accordance with increase of the rotating speed detected by the detecting means , first computing means for computing a change rate of the rotating speeds in predetermined rotational phase positions of the crankshaft based on the rotating speed detected by the detecting means, and means for determining an occurrence of the misfire in the engine based on comparison of said change rate computed by the first computing means with a predetermined reference value. The apparatus is characterized by second computing means for computing a change of amount of the fuel to be injected from the injection nozzle and means for correcting the reference value used to determine the misfire based on the change of amount of the fuel computed by the second computing means.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a schematic drawing showing a diesel engine system;
Fig. 2 is a diagrammatic cross-sectional view showing an injection pump;
Fig. 3 is a front view showing the structure of a speed sensor;
Fig. 4(a) is a timing chart showing rotation speed fluctuation of the crankshaft;
Fig. 4(b) is a timing chart showing pulse signals;
Fig. 5 is a flowchart showing a routine for detecting misfire;
Fig. 6 is a graph showing function data for an injection fuel amount control;
Fig. 7 is a three dimensional graph showing function data used to compute a basic judgment value;
Fig. 8(a) to 8(c) are graphs showing function data used to compute a compensation value;
Fig. 9 is a timing chart showing the relationship between misfires and speed fluctuations of the crankshaft;
Fig. 10 is a flowchart showing a routine for detecting misfire;
Fig. 11 is a graph showing function data for a prior art injection fuel amount control,
Fig. 12 is a graph illustrating and explaining a specific part of Fig. 11; and
Fig. 13 is a timing chart showing fluctuations of the engine speed and changes in the fuel injection amount target value in a prior art diesel engine.

### DESCRIPTION OF SPECIAL EMBODIMENTS

A first embodiment of an apparatus for detecting misfires in an electronic controlled diesel engine according to the present invention.

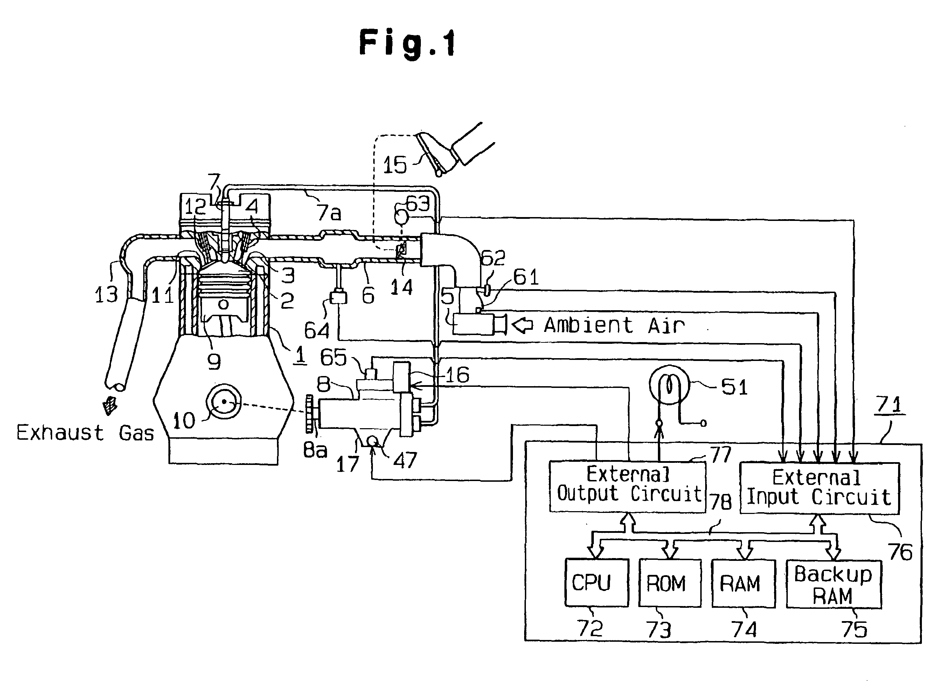

Fig. 1 is a schematic drawing showing an electronic controlled diesel engine system according to the first embodiment. A diesel engine 1 has a plurality of cylinders. A combustion chamber 2 is defined in each cylinder. Each cylinder is provided with an intake port 3, an intake valve 4, which opens and closes the port 3, a fuel injection nozzle 7, an exhaust port 11, and an exhaust valve 12, which opens and closes the port 11. A piston 9 is reciprocally accommodated in the cylinder. During the suction stroke, the intake valve 4 opens the intake port 3. This draws ambient air through an air cleaner 5 and into an intake passage 6. The air then flows into the combustion chamber 2. The injection nozzle 7 injects fuel, which is pressurized and sent to the nozzle 7 by a conventional distributor type fuel injection pump 8, via a fuel line 7a, into the combustion chamber 2. During the compression stroke, the piston 9 moves upward and pressurizes the fuel and air in the combustion chamber 2. This ignites the fuel and air and causes combustion. As a result, the piston 9 is moved downward to rotate a crankshaft 10 and produce drive force in the engine 1. During the exhaust stroke, the exhaust valve 12 opens the exhaust port 11. This discharges the exhaust gas, which is produced in the combustion chamber 2, into an exhaust passage 13, which leads out of the engine 1.

A throttle valve 14 is provided in the intake passage 6. The throttle valve 14 cooperates with the manipulation of a gas pedal 15 and selectively opens and closes the intake passage 6. The operation of the throttle valve 14 adjusts the flow rate of the air drawn into the intake passage 6, or the intake air flow rate Q.

The injection pump 8 pressurizes and sends fuel to each injection nozzle 7 through the fuel line 7a so that the fuel may be burned in the associated combustion chamber 2. The injection pump 8 pressurizes the fuel from a fuel tank (not shown), and discharges the required amount of fuel at a certain timing toward each injection nozzle 7. The injection nozzle 7 then injects fuel into the associated combustion chamber 2. An electromagnetic spill valve 16 is provided in the injection pump 8 to adjust the amount of fuel injected through each nozzle 7 every time the injection pump 8 discharges fuel. The electromagnetic spill valve 16 adjusts the timing for terminating the discharge of fuel from the pump 8, thereby controlling the fuel injection amount through each nozzle 7. A timing device 17 is also provided in the injection pump 8 to adjust the timing for commencing the discharge of fuel from the pump 8, that is, the timing for injecting fuel from each nozzle 7. The spill valve 16 and the timing device 17 are electrically controlled. The injection pump 8 has a drive shaft 8a, which is coupled to a crankshaft 10 of the engine 1. Accordingly, the drive shaft 8a is rotated synchronously with the crankshaft 10. Thus, the injection pump 8 is driven cooperatively with the engine 1.

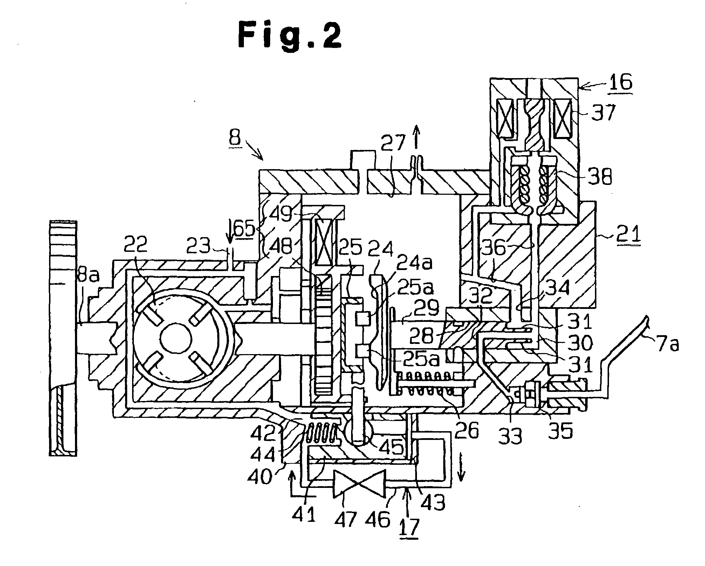

Fig. 2 shows the structure of the injection pump 8. The injection pump 8 has a housing 21. A fuel feed pump 22 (rotated 90 degrees in the drawing to facilitate description) is driven by the drive shaft 8a in the housing 21. The housing 21 also has a fuel port 23 that is connected to the feed pump 22.

The injection pump 8 includes a cam plate 24 and a roller ring 25. The cam plate 24 and the roller ring 25 constitute a cam means. The cooperation of the roller ring 25 and the cam plate 24, which is rotated by the drive shaft 8a, contributes to the fuel discharge from the injection pump 8. The cam plate 24 is disk-like and coupled to the proximal end (right end as viewed in the drawing) of the drive shaft 8a by a coupling (not shown). A cam face 24a is defined on one side of the cam plate 24 with a plurality of lobes projecting therefrom. The roller ring 25 is opposed to the cam face 24a. A plurality of cam rollers 25a are arranged circumferentially on the roller ring 25. The number of lobes on the cam face 24a corresponds to the number of cylinders in the engine 1. A spring 26 arranged adjacent to the cam plate 24 urges the plate 24 such that the cam face 24a is constantly engaged with the cam rollers 25a.

A fuel chamber 27 and a barrel 28 are provided in the housing 21. A plunger 29 is coupled integrally with the cam plate 24 and accommodated in the barrel 28. The rotating force of the drive shaft 8a is transmitted to the cam plate 24. This rotates the cam face 24a that is engaged with the cam rollers 25a. Thus, the cam plate 24 reciprocates axially (horizontally as viewed in the drawing). The number of reciprocation during a single rotation of the cam plate 24 corresponds to the number of cylinders in the engine 1. The rotation and reciprocating movement of the cam plate 24 rotates and reciprocally moves the plunger 29 in an integral manner. Accordingly, the plunger 29 moves forward (toward the right as viewed in the drawing) in the barrel 28 as the lobes of the cam face 24a engage the cam rollers 25a and moves backward (toward the left as viewed in the drawing) in the barrel 28 as the lobes move off the cam rollers 25a.

In the barrel 28, a pressure chamber 30 is defined between the distal end of the plunger 29 and the opposed wall of the barrel 28. A plurality of intake grooves 31 and distribution ports 32 are defined in the distal and outer circumferential surface of the plunger 29. The number of the intake grooves 31 and the distribution ports 32 correspond to the number of cylinders in the engine 1. A plurality of distribution passages 33 and an intake port 34 are defined in the housing 21 at locations corresponding to the intake grooves 31 and distribution ports 32. A delivery valve 35 is provided at the outlet of each distribution passage 33. The delivery valve 35 is opened in accordance with the fuel pressure in the associated distribution passage 33.

When the feed pump 22 is driven by the rotation of the drive shaft 8a, the fuel from the fuel tank (not shown) is drawn into the fuel chamber 27 through the fuel chamber 23. The backward movement of the plunger 29 during the rotation of the drive shaft 8a decreases the pressure in the pressure chamber 30. The fuel in the fuel chamber 27 is drawn into the pressure chamber 30 when each intake groove 31 is communicated with the intake port 34. The forward movement of the plunger 29 pressurizes the pressure chamber 30. This discharges the fuel in the pressure chamber 30 through each distribution passage 33. The associated delivery valve 35 is then opened to discharge the fuel into the associated fuel line 7a.

A spill passage 36 is defined in the housing 21 to connect the pressure chamber 30 with the fuel chamber 27. An electromagnetic spill valve 16 is provided in the spill passage 36. The spill valve 16 includes a coil 37 and a valve body 38. The spill valve 37 is normally opened. When the coil 37 is de-energized, the valve body 38 opens the spill passage 36 and releases the fuel in the pressure chamber 30 into the fuel chamber 27. When the coil 37 is energized, the valve body 38 closes the spill passage 36 and stops the flow of fuel from the pressure chamber 30 to the fuel chamber 27.

Accordingly, the flow of fuel released into the fuel chamber 27 from the pressure chamber 30 is adjusted by controlling the spill valve 37. When the spill valve 16 opens the spill passage 36 during the forward movement of the plunger 29, the pressure decreases in the pressure chamber 30. This stops the discharge of fuel from the injection pump 8 and ends the injection of fuel from the injection nozzle 7. Accordingly, the terminating timing of fuel injection is controlled.

A timing device 17 (rotated 90 degrees in the drawing to facilitate description) is provided in the housing 21. The timing device 17 rotates the roller ring 25 about its axis. This alters the timing at which the lobes on the cam face 24a engage the cam rollers 24. Thus, the displacement of the roller ring 25 alters the timing at which the reciprocating of the plunger 29 is initiated. As a result, this adjusts the timing of commencing fuel injection from each nozzle 7.

The timing device 17 includes a housing 40 and a piston 41, which is accommodated in the housing 40. A low pressure chamber 42 is defined in the housing 40 at one side of the piston 41 and a pressurizing chamber 43 is defined at the other side of the piston 41. A portion of the fuel that is pressurized by the feed pump 22 is drawn into the low pressure and pressurizing chambers 42, 43. The pressurized fuel acts on the piston 41. A spring 44 is arranged in the low pressure chamber 42 to urge the piston 41 toward the pressurizing chamber 43. A slide pin 45 extends upward from the piston 41 and is coupled to the roller ring 25. The fuel pressure in the pressurizing chamber 43 moves the piston 41 and inclines the slide pin 45. This rotates the roller ring 25 about the drive shaft 8a.

The position of the piston 41 is determined by the equilibrium between fuel pressure in the pressurizing chamber 43 and the urging force of the spring 44. This, in turn, determines the rotational position of the roller ring 25 to adjust the timing at which the cam plate 24 and the plunger 29 commence forward movement. The timer device 17 further includes a timing control valve (TCV) 47, which is provided in a communication passage 46 extending between the low pressure chamber 42 and the pressurizing chamber 43. The TCV 47 adjusts the flow rate of the fuel in the communicating passage 46 to adjust the fuel pressure in the pressurizing chamber 43. This controls the position of the piston 41 and thus controls the timing of initiating fuel injection from each nozzle 7.

A pulser 48, which serves as a rotating body, is secured on the drive shaft 8a and rotates integrally with the shaft 8a. A pickup coil 49, which serves as a pulse outputting means, is opposed to the circumferential surface of the pulser 48. The pulser 48 and the pickup coil 49 constitute a speed sensor 65, which serves as a speed detecting means for detecting the rotating speed of the crankshaft 10, or the engine speed NE.

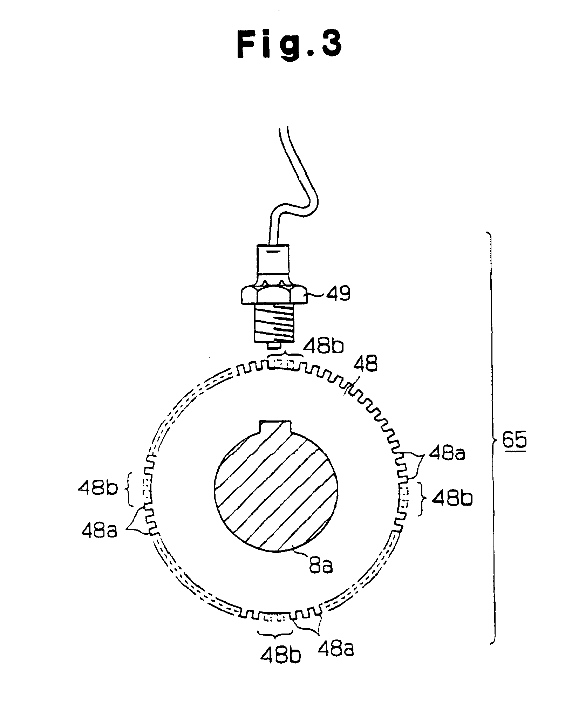

As shown in Fig. 3, the pulser 48 has a plurality of indicia, or projections 48a (56 projections in this embodiment), that project from its circumferential surface. An equal interval is provided between each pair of adjacent projections 48a. Among the projections 48a on the circumferential surface of the pulser 48, there are gaps 48b at which two projections 48a are missing. There are four such gaps 48b in this embodiment. *The* number of gaps 48b is the same as the number of the cylinders in the engine 1. An equal interval is provided between each pair of adjacent gaps 48b.

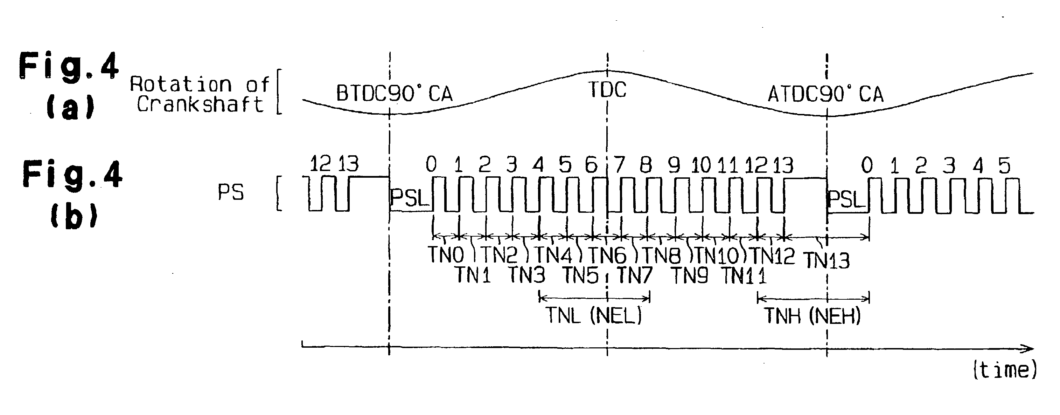

Fig. 4(a) is a timing chart that shows the phase alteration of the crankshaft 10. Fig. 4(b) is a timing chart that shows pulse signals (PS) issued by the pickup coil 49. As shown in Fig. 4(a), the crankshaft 10 rotates and alters its phase in a cyclic manner. The phase alteration is causes by the cyclic reciprocation of the piston 9 in each cylinder during operation of the engine 1. The pickup coil 49 outputs a pulse signal PS as each projection 48a passes thereby. Thus, except for the times when the gaps 48b pass the pickup coil 49, a single pulse signal is outputted when the crankshaft 10 rotates a predetermined angle, or crank angle CA (in this embodiment, 11.25 degrees).

As shown in Fig. 4(b), the signal does not rise (the gap signal PSL) when a gap 48b passes by the pickup coil 49. The gap signals PSL correspond to the vicinity of a phase on the crankshaft 10 that is located 90 degrees before the phase corresponding to the top dead center (BTDC 90°) and to the vicinity of another phase located 90 degrees after the top dead center position TDC (ATDC 90°). A total of fourteen pulse signals PS (pulse signal no. 0 to pulse signal no. 13) are produced between the range of BTDC 90° and ATDC 90°. The engine speed NE is obtained based on the time length between two certain pulse signals PS.

The pickup coil 49 is provided integrally with the roller ring 25 to maintain a consistent relationship between the phase of the pulse signals PS output from the pickup coil 49 and the phase of the reciprocation of the plunger 29 regardless of the rotational position of the roller ring 25.

As shown in Fig. 1, an air flow meter 61 is provided adjacent to the air cleaner 5. The air flow meter 61 detects the intake air flow rate Q of the air drawn into the intake passage 6 and outputs a corresponding signal. An intake air temperature sensor 62 detects the temperature of the ambient air drawn into the intake passage 6, or the intake air temperature THA, and outputs a corresponding signal. A throttle sensor 63 provided in the vicinity of the throttle valve 14 detects the opening amount of the valve 14 as the position of the gas pedal 15 ACCP and outputs a corresponding signal. The throttle sensor 63 incorporates a conventional idle switch (not shown). The idle switch is activated to output an idle signal IDL when the throttle valve 14 is completely closed, that is, when the gas pedal 15 is not pressed. An intake air pressure sensor 64 provided in the intake passage 6 detects the intake air pressure PM and outputs a corresponding signal. The speed sensor 65 indirectly detects the rotating speed of the crankshaft 10, or the engine speed NE, based on the rotation of the drive shaft 8a. The speed sensor 65 issues the pulse signals PS corresponding to the engine speed NE.

A warning lamp 51 is provided on an instrument panel arranged in front of the driver's seat to warn the driver of the occurrence of a misfire in the engine 1.

The signals outputted from the sensors 61, 62, 63, 64, 65 are inputted into an electronic control unit (ECU) 71. The ECU 71 controls the electromagnetic spill valve 16, the TCV 47 in the injection pump 8, and the warning lamp 51 based on the inputted signals.

The ECU 71 includes a central processing unit (CPU) 72, a read only memory (ROM) 73, a random access memory (RAM) 74 and a backup RAM 75. The ECU 71 constitutes a logic computing circuit by connecting the CPU 72, the ROM 73, the RAM 74, and the backup RAM 75 to an input circuit 76 and an output circuit 77 with a bus 78. The CPU 72 is provided with a computing control function and a counting function. A predetermined control program, among other programs, is stored in the ROM 73. Computation results of the CPU 72, among other data, are temporarily stored in the RAM 74. Data is stored beforehand in the backup RAM 75. The input circuit 76 includes a buffer, a waveform shaping circuit, and an analog to digital (A/D) converter. The output circuit 77 includes a drive circuit. The sensors 61, 62, 63, 64, 65 are connected to the input circuit 76. The electromagnetic spill valve 16, the TCV 47, and the warning lamp 51 are connected to the output circuit 77.

The CPU 72 reads the input value of the signals sent from the sensors 61, 62, 63, 64, 65 by way of the input circuit 76. Based on the input values, the CPU 72 controls the electromagnetic spill valve 16, the TCV 47, and the warning lamp 51 to control the amount of injected fuel, the injection timing, and the detection of misfires.

The fuel injection amount control refers to the control of the electromagnetic spill valve 16 for controlling the injection amount discharged from the injection pump 8 in accordance with the operating state of the engine 1. Through the injection amount control, the CPU 72 computes the final injection amount QFIN, which is used to control the electromagnetic spill valve 16 based on the intake air flow rate Q, the intake air temperature THA, the position of the gas pedal ACCP, the intake air pressure PM, and the engine speed NE that are detected by the sensors 61, 62, 63, 64, and 65, respectively.

The fuel injection timing control refers to the control of the TCV 47 (the timing device 17) for controlling the timing of initiating the discharge of fuel from the injection pump 8 in accordance with the operating state of the engine 1. Through the injection timing control, the CPU 72 computes an advance angle value that is used to control the TCV 47 based on the parameters of the position of the gas pedal ACCP and the engine speed NE that are detected by the sensors 63 and 65, respectively.

The misfire detecting control refers to the detection of misfires in the engine 1 based on fluctuations of the engine speed NE. The fluctuations are detected from the pulse signals PS that are outputted from the speed sensor 65 (pickup coil 49).

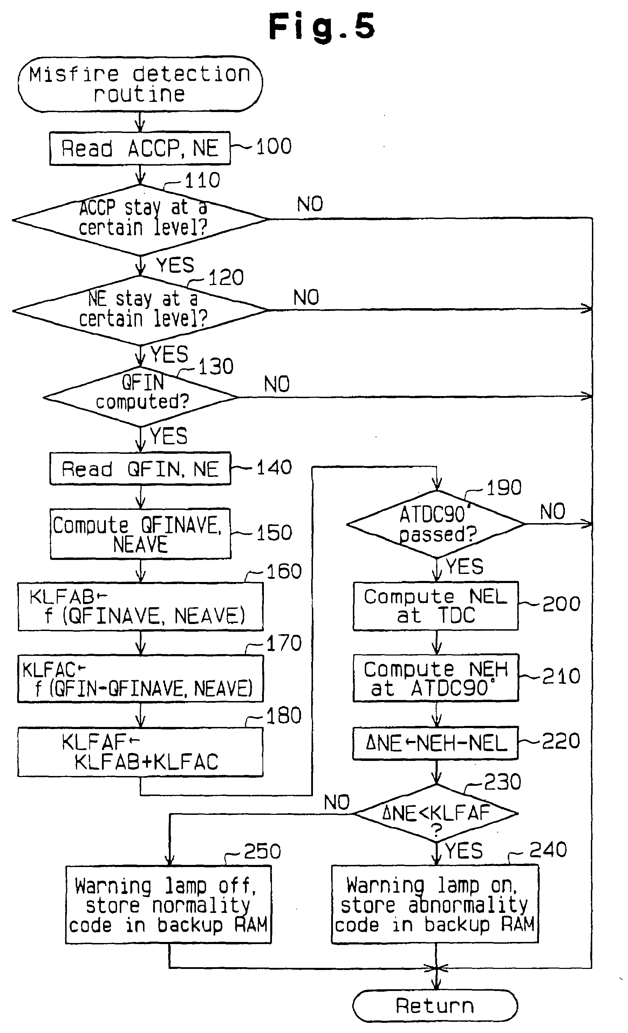

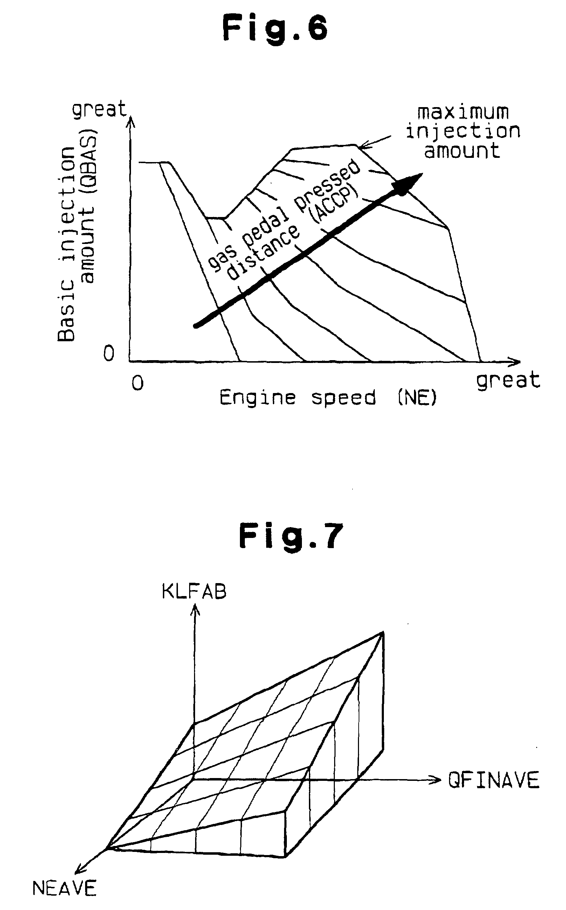

Among the various controls executed by the ECU 71, the misfire detection control will now be described. The ROM 43 includes a control program that is related to the flowchart shown in Fig. 5, which is a misfire detection routine, and the function data shown in Figs. 6 to 8. The ECU 71 executes the routine periodically for every predetermined time interval.

In step 100, the ECU 71 reads the values of the gas pedal position ACCP and the engine speed NE that are detected by the sensors 63 and 65, respectively.

In step 110, the ECU 71 judges whether the gas pedal position ACCP has been maintained at a certain level for a predetermined length of time. If the position of the gas pedal ACCP has changed during the predetermined length of time, the ECU judges that the operating state of the engine 1 has changed and temporarily suspends the subsequent processing. If the position of the gas pedal ACCP has been constant for the predetermined length of time, the ECU 71 moves on to step 120.

In step 120, the ECU 71 judges whether the engine speed NE has been maintained at a certain level for a predetermined length of time. If the engine speed NE has changed during the predetermined length of time, the ECU judges that the operating state of the engine 1 has changed and temporarily suspends the subsequent processing. If the engine speed NE has been constant for the predetermined length of time, the ECU 71 moves on to step 130.

In step 130, the ECU 71 determines whether a final injection amount QFIN to be injected in the current routine has been computed. The ECU 71 computes the final injection amount QFIN in another routine, namely in the fuel injection amount control routine. In the computation of the final injection amount QFIN, the ECU 71 computes the basic injection amount QBAS based on the pressed distance of the gas pedal ACCP and the engine speed NE by referring to the function data of Fig. 6, which has the governor characteristics. The ECU 71 computes the final injection amount QFIN by adjusting the value of the computed basic injection amount QBAS based on various parameters including the intake air temperature THA. In the function data of Fig. 6, if the gas pedal position ACCP is maintained at a certain level, the basic injection amount QBAS decreases as the engine speed NE increases, and increases as the engine speed NE decreases. In step 130, if the final injection amount QFIN has not been computed, the ECU 71 temporarily suspends the subsequent processing. If the final injection amount QFIN has been computed, the ECU 71 moves on to step 140, where it computes a reference value used in a misfire detection.

In step 140, the ECU 71 reads the value of the final injection amount QFIN computed in the current routine, and the value of engine speed NE detected by the speed sensor 65. The engine speed NE is detected by the speed sensor 65 when the crank angle CA is 180 degrees before the injection in the current routine.

In step 150, the ECU 71 computes the average value QFINAVE of the final injection amounts QFIN computed in the previous n routines. The ECU 71 also computes the average value NEAVE of the engine speeds NE detected in step 140 of the previous routines. The number "n" is determined such that the average value QFINAVE of the final injection amounts QFIN remains stable even if a misfire occurs in the engine 1.

In step 160, the ECU 71 computes a basic detection value KLFAB used for detecting misfires based on the average values QFINAVE and NEAVE computed in the current routine. The ECU 71 computes the basic detection value KLFAB by referring to a function data shown in Fig. 7. In the function data of Fig. 7, the basic detection value KLFAB increases as the average value QFINAVE increases and decreases as the average value NEAVE increases.

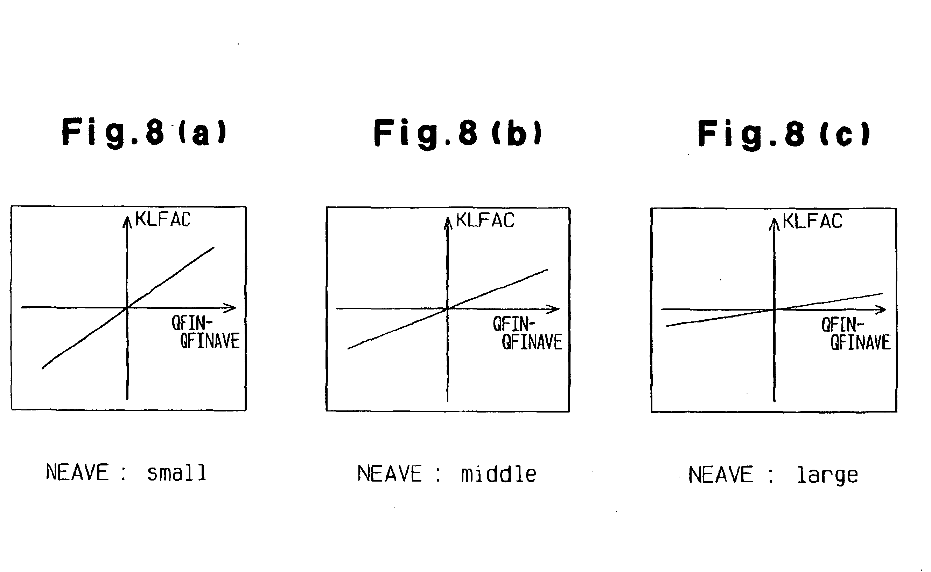

In step 170, the ECU 71 computes a compensation value KLFAC used in the misfire detection based on the difference between the value of the final injection amount QFIN computed in the current routine and the average value QFINAVE, and on the average value NEAVE computed in the current routine. The ECU 71 computes the compensation value KLFAC by referring to function data in Figs. 8(a), 8(b) and 8(c). In the function data, if the average value NEAVE of the engine speed NE is maintained at a certain level, the compensation value KLFAC increases as the difference between the final injection amount QFIN and its average value QFINAVE (QFIN - QFINAVE) increases. The increase ratio of the compensation value KLFAC decreases as the engine speed average value NEAVE increases. The difference between the final injection amount QFIN and its average value QFINAVE indicates how much the final injection amount QFIN has changed from the final injection amount average value QFINAVE.

In step 180, the ECU 71 adds the compensation value KLFAC to the basic detection value KLFAB to compute a final detection value KLFAF. The final detection value KLFAF functions as a reference value in a misfire detection.

In step 190, the ECU 71 judges whether the rotational phase of the crankshaft 10 has passed a predetermined angle (a crank angle of 90 degrees in this embodiment) after the top dead center TDC. In other words, the ECU 71 judges whether the rotational phase of the crankshaft 10 has passed a position ATDC 90°, which is 90 degrees after the top dead center. As shown in Fig. 4, the position ATDC 90° corresponds to the occurrence of the thirteenth pulse signal PS in a series of pulse signals PS. If the rotational phase of the crankshaft 10 has not passed the position ATDC 90°, the ECU 71 temporarily suspends the subsequent processing. If the rotational phase of the crankshaft 10 has passed the position ATCD 90°, the ECU 71 moves on to step 200.

In step 200, the ECU 71 computes a first instantaneous speed NEL of the crankshaft 10 at the top dead center TDC. More specifically, the ECU 71 computes the fourth pulse time TN4, the fifth pulse time TN5, the sixth pulse time TN6 and the seventh pulse time TN7 based on a series of pulse signals PS in Fig 4(b). A pulse time TN refers to the length of time between the rise of a pulse signal PS to the rise of the subsequent pulse PS.

Pulse times TN0 to TN13 may be computed. Each of pulse times TN0 to TN13 corresponds to one of the pulse signal PS0 to the thirteenth pulse signal PS13, respectively. The occurring point of the sixth pulse signal PS6 corresponds to the top dead center TDC in the rotational phase of the crankshaft 10. The occurring point of the thirteenth pulse signal PS13 corresponds to a position BTDC 90°, which is ninety degrees before the top dead center, or a position ATDC 90°, which is ninety degrees after the top dead center, The ECU 71 adds up the pulse times TN4, TN5, TN6 and TN7 to compute a first accumulated time length TNL as shown in Fig. 4. The ECU 71 computes the inverse number of the first accumulated time length TNL to compute the first instantaneous speed NEL.

In step 210, the ECU 71 computes a second instantaneous speed NEH of the crankshaft 10 when the rotational phase of the crankshaft 10 is at a position ATDC 90°, which is ninety degrees after the top dead center TDC. More specifically, the ECU 71 computes the twelfth pulse time TN12 and the thirteenth pulse time TN13 based on a series of pulse signals PS in Fig. 4(b). The ECU 71 then adds up the pulse times TN12 and TN13 to compute a second accumulated time length TNH as shown in Fig. 4. The ECU 71 computes the inverse number of the second accumulared time value TNH to compute the second instantaneous speed NEH.

In step 220, the ECU 71 computes the difference between the instantaneous speeds TNH and TNL to obtain a misfire value ΔNE. More specifically, the misfire value ΔNE is the difference between the crankshaft speed NEL computed when the crankshaft 10 rotates a predetermined angle (4 x 11.25° = 45° ) ) in the vicinity of the top dead center TDC, and the crankshaft speed NEH computed when the crankshaft 10 rotates a predetermined angle (45° )in the vicinity of the position ATDC90°, which is ninety degrees after the top dead center.

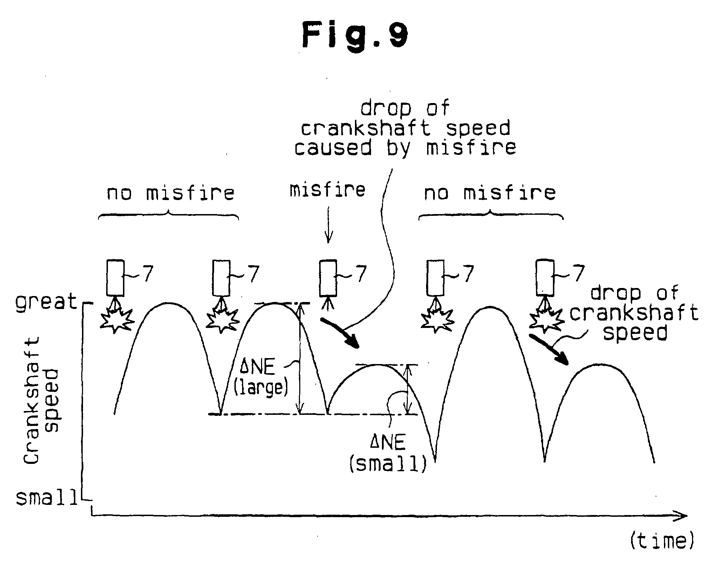

Fig. 9 shows fluctuations of the crankshaft speed, or fluctuations of the engine speed NE detected by the speed sensor 65. In Fig. 9, a case in which there is a misfire is compared with a case in which there is no misfire. As shown in the graph, the speed of the crankshaft 10 fluctuates periodically. If the fuel injected through the nozzle 7 is combusted, the range of the crankshaft speed fluctuation remains substantially the same right after the complete combustion. This fluctuation range of the engine speed NE, or the misfire value ΔNE, is large enough and indicates that there is no misfire. On the other hand, if the fuel injected through the injection nozzle 7 is not combusted, the speed fluctuation right after the misfire (a misfire value ΔNE) is smaller than the speed fluctuation before the misfire (a misfire value ΔNE). The small misfire value ΔNE indicates the occurrence of a misfire.

In step 230, the ECU 71 judges whether the misfire value ΔNE is smaller than the final detection value KLFAF, which functions as a reference value for detecting misfires. If the misfire value ΔNE is smaller than the final detection value KLFAF, the ECU 71 judges that a misfire has occurred in a particular cylinder of the engine 1 and moves on to step 240.

In step 240, the ECU 71 lights a warning lamp 51 to warn the driver of the occurrence of misfires. The ECU 71 further stores an abnormality code, which indicates the occurrence of misfire, in the backup RAM 75 and suspends the subsequent processing.

If the misfire value ΔNE is not smaller than the final diagnostic value KLFAF in step 230, the ECU 71 judges there has been no misfire and moves to step 250.

In step 250, the ECU 71 turns off the warning lamp 51. The ECU 71 stores a normality code indicating that normal combustion is taking place in the engine 1 in the backup RAM 75 and suspends subsequent processing.

As described above, when the engine 1 is operated, the crankshaft 10 synchronously rotates the drive shaft 8a of the injection pump 8. The plunger 29 is operated synchronously with the rotation of the drive shaft 8a by the cooperation between the roller ring 25 and the cam plate 24. This discharges fuel from the fuel pump 8 and injects fuel into each combustion chamber 2 through the associated injection nozzle 7. The combustion of the fuel injected in each combustion chamber 2 moves the piston 9 and rotates the crankshaft 10.

In the injection pump 8, as the pulser 48, which constitutes a part of the rotational speed sensor 65, rotates during the rotation of the drive shaft 8a, the plurality of projections 48a and gaps 48b on the pulsar 48 pass by the pickup coil 49. As the coil 49 detects each projection 48a, the pickup coil 49 outputs successive pulse signals PS that are correlated with the rotating speed of the crankshaft 10 (the engine speed NE).

For detecting misfires in the engine 1, the ECU 71 computes the difference between two engine speeds NE at two different rotational phase positions of the crankshaft 10 based on a set of successive pulse signals PS. The ECU 71 then compares the obtained difference of the engine speeds NE with a predetermined reference value, or judges whether the engine speed NE has abruptly dropped, to detect misfires.

More specifically, the ECU 71 adds up the pulse times TN4 to TN7, which correspond to the fourth to seventh pulse signals respectively, to obtain the first accumulated time length TNL. The ECU 71 then computes the inverse number of TNL to obtain the first instantaneous speed NEL. Further, the ECU 71 adds up the pulse times TN12 and TN13, which correspond to the twelfth and thirteenth pulse signals PS, to obtain the second accumulated time length TNH. The ECU 71 then computes the inverse number of TNH to obtain the second instantaneous speed NEH. The ECU 71 computes the difference between the instantaneous speeds NEL and NEH to obtain a misfire value ΔNE. The ECU 71 compares the ΔNE with the final detection value KLFAF to detect misfires.

In the fuel injection amount control, the ECU 71 controls the injection pump 8 according to the governor characteristics, in which fuel injection amount decreases as the engine speed increases. Therefore, if the engine speed NE is lowered by a misfire, the ECU 71 controls the injection pump 8 to increase the amount of fuel injected through each nozzle 7 according to the governor characteristics. This increases the engine speed NE. In response to the increase in the engine speed NE, the ECU 71 controls the injection pump 8 according to the governor characteristics to reduce the amount of fuel injected through each injection nozzle 7. This causes the engine speed NE to decrease again. This decrease in the engine speed NE may cause a false detection of a misfire.

Accordingly, the ECU 71 according to the first embodiment computes the basic detection value KLFAB based on the average value QFINAVE of the final injection amounts QFIN computed in the previous n misfire detection routines, and on the average value NEAVE of the engine speeds NE detected in the previous n misfire detection routines. Further, the ECU 71 computes the compensation value KLFAC based on the difference between the final injection amount computed in the current routine QFIN and the average final injection amount QFINAVE (the changed amount of the final injection amount QFIN) and on the average value NEAVE of the engine speed NE. The ECU 71 adds the compensation value KLFAC to the computed basic detection value KLFAB to compute the final detection value KLFAF. The final diagnostic value KLFAF functions as a reference value for detecting misfires.

As described above, in the first embodiment, the final detection value KLFAF is adjusted in consideration of the decrease in the engine speed NE after detecting a misfire. Accordingly, right after a misfire is detected, the difference between instantaneous engine speeds NEL and NEH (the misfire value ΔNE) is compared with the final detection value KLFAF in view of the subsequent decrease in the engine speed NE. As a result, misfires are detected in an electronically controlled diesel engine that controls fuel injection amount according to the above described governor characteristics. In addition, false detection of misfires, which is caused by a decrease in the engine speed NE right after a misfire, is prevented.

Since false detection of a misfire after detecting a misfire is avoided, it is possible to spot a cylinder in which a misfire has really occurred. This facilitates the execution of a countermeasure after detecting misfires.

In the first embodiment, the drawback in misfire detection caused by the governor characteristics is dealt with by improving the arithmetic process performed by the ECU 71. Therefore, the governor characteristics, which are necessary for controlling the engine 1, require no modification. Thus the conventional governor characteristics may continue to be employed.

In the first embodiment, the warning lamp 51 is lit when a misfire is detected. This immediately informs the driver of the misfire. Thus, undesirable emissions from the engine 1 may be dealt with early by inspecting the engine 1 and the injection pump 8.

In the first embodiment, when misfires are detected, the ECU 71 stores an abnormality code, which indicates the occurrence of misfire, in the backup RAM 75. Thus, the history of misfires may be confirmed by reading out the data in the backup RAM 75 during maintenance of the engine 1. This facilitates the search for the cause of the misfire in the engine 1, the injection pipe 8 and other parts. This also enables undesirable emissions from the engine 1 to be dealt with at an early stage.

A second embodiment of the present invention will now be described with reference to drawings. Since only part of the misfire detection routine is different from the first embodiment, the differences from the first embodiment will mainly be discussed below.

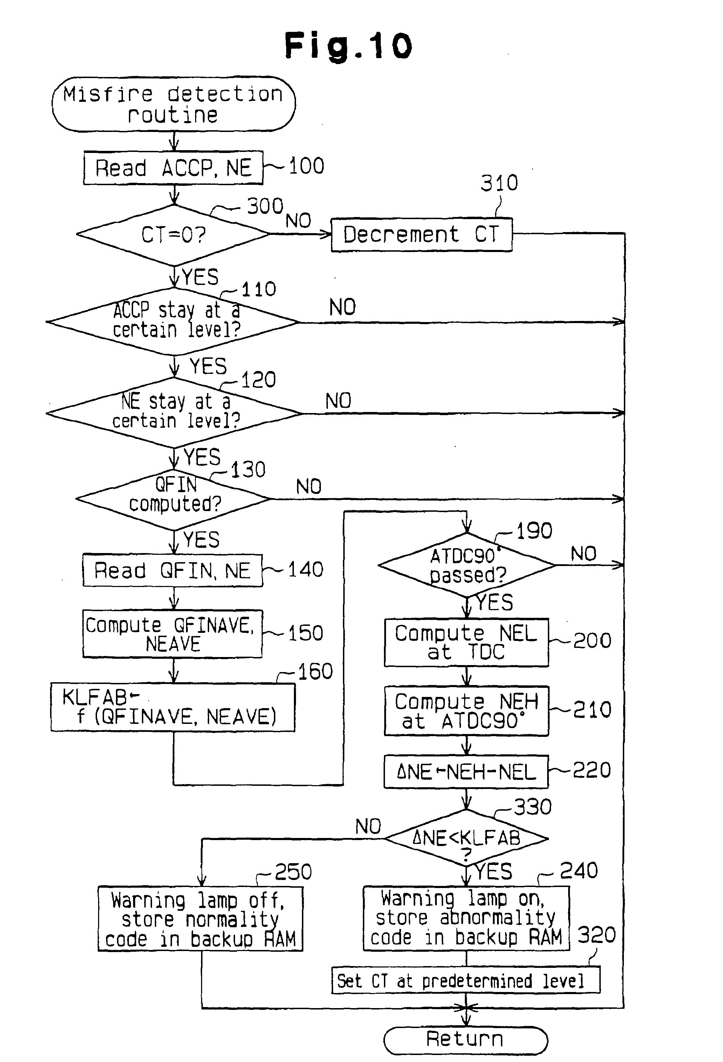

Fig. 10 shows a misfire detection routine. The ECU 71 executes the routine periodically at predetermined time intervals. In the routine according to the second embodiment, steps 100 to 160, 190 to 220, 240 and 250 have the same content as the corresponding steps in Fig. 5 and descriptions thereof are omitted. The routine of Fig. 10 has no steps that are equivalent to steps 170 and 180 in the routine of Fig. 5. The routine of Fig. 10 has steps 300, 310 and 320, instead. Further, step 230 in the routine of Fig. 5 is replaced with step 330.

In step 300 subsequent to step 100, the ECU 71 judges whether a count value CT is zero. The ECU 71 gives a predetermined value to the count value CT in step 320 subsequent to step 240. That is, the ECU 71 gives a predetermined value to the count value CT when a misfire is detected.

In step 300, if the count value CT is not zero, the ECU 71 judges that a predetermined period of time has not elapsed since a misfire was detected and moves on to step 310. In step 310, the ECU 71 decrements the counter value CT and then temporarily suspends the subsequent processing, such that the misfire detection is not executed in the current routine. If the counter value CT is zero in step 300, on the other hand, the ECU 71 judges that the predetermined period of time has elapsed since a misfire was detected and moves on to step 110 for executing the misfire detection. That is, when a misfire is detected, the misfire detection is prohibited for a predetermined length of time after the detection of the misfire.

The routine of Fig. 10 has no steps equivalent to steps 170 and 180 in the routine of Fig. 5. Therefore, the basic detection value KLFAB computed in step 160 is used as a reference value without being adjusted. Thus, the ECU 71 compares the misfire value ΔNE with the basic detection value KLFAB in step 330 for detecting misfires.

In this embodiment, the ECU 71 prohibits the misfire detection for the predetermined length of time after detecting a misfire. Therefore, if the engine speed NE drops again after a misfire is detected, the misfire detection will not be executed while the engine speed stays low. As a result, misfires are detected in an electronically controlled diesel engine that controls fuel injection amount according to the above described governor characteristics. In addition, false detection of misfires, which is caused by a decrease in the engine speed NE right after a misfire is detected, is prevented.

The other operations and advantages of the second embodiment are the same as those of the first embodiment.

The present invention may be further embodied as follows. The following embodiments have the same operation and advantages as the above first and second embodiments.
(1) In the above described first and second embodiments, the difference between the first instantaneous crankshaft speed NEH and the second instantaneous crankshaft speed NEL is computed to obtain the misfire value ΔNE. The misfire value ΔNE is then compared with the predetermined reference value, that is, the final detection value KLFAF or the basic detection diagnostic value KLFAB for detecting misfires. Alternatively, the ratio of the first instantaneous crankshaft speed NEH and the second instantaneous crankshaft speed NEL may be compared with a predetermined reference value for detecting misfires.
(2) The difference between or the ratio of the first and second accumulated time lengths TNL and TNH, which correspond to the first and second instantaneous crankshaft speeds NEH and NEL, may be compared with a predetermined reference value for detecting misfires.
(3) In the first embodiment, the compensation value KLFAC is computed based on the difference between the final injection amount QFIN and its average value QFINAVE and on the average value NEAVE of the engine speed NE. However, the compensation value KLFAC may be computed based only on the difference between the final injection amount QFIN and its average value QFINAVE.
(4) In the above embodiments, the speed sensor 65 located in the injection pump 8 indirectly detects the speed of the crank shaft 10. However, a speed sensor that directly detects the speed of the crankshaft 10 may be provided.
(5) In the above embodiments, the injection pump 8 has an electromagnetic spill valve 16, which functions as an actuator that controls the fuel injection amount. However, an injection pump may be provided with a spill ring on the plunger and an electromagnetic solenoid for moving the ring, which functions as an actuator for controlling the fuel injection amount.

Therefore, the present examples and embodiment are to be considered as illustrative and not restrictive, and the invention is not to be limited to the details given herein, but may be modified within the scope of the appended claims.

An apparatus for detecting misfires in an electronic controlled diesel engine (1). The engine (1) has a crankshaft (10), a combustion chamber (2), an injection nozzle (7) for injecting fuel into the combustion chamber (2), and an injection pump (8) driven by the crankshaft (10) and used to pressurize and discharge the fuel toward the nozzle (7). A speed sensor (65) detects the rotating speed of the crankshaft (10). An electronic control unit (71) controls the injection pump (8) to adjust the amount of the fuel to be injected from the injection nozzle (7). The control unit (71) controls the injection pump (8) so that the amount of the fuel to be discharged from the injection pump (8) to the injection nozzle (7) decreases in accordance with increase of the rotating speed detected by the sensor (65). The control unit (71) computes a change rate of the rotating speeds in predetermined rotational phase positions of the crankshaft (10) based on the rotating speed detected by the detecting means (65). The control unit (71) determines an occurrence of the misfire in the engine (1) based on comparison of the change rate with a predetermined reference value. The control unit (71) computes a change of amount of the fuel to be injected from the injection nozzle (7) and corrects the reference value used to determine the misfire based on the change of amount of the fuel.

## Claims

1. An apparatus for detecting misfire in an electronic controlled diesel engine (1), the engine (1) having a crankshaft (10), a combustion chamber (2), an injection nozzle (7) for injecting fuel into the combustion chamber (2), and an injection pump (8) driven by the crankshaft (10) and used to pressurize and discharge the fuel toward the nozzle (7), said engine (1) performing combustion of the fuel to rotate and drive the crankshaft (10), said apparatus including means (65) for detecting the rotating speed of the crankshaft (10), means (71) for controlling the injection pump (8) to adjust the amount of the fuel to be injected from the injection nozzle (7) into the combustion chamber (2), said controlling means (71) controlling the injection pump (8) so that the amount of the fuel to be discharged from the injection pump (8) to the injection nozzle (7) decreases in accordance with increase of the rotating speed detected by the detecting means (65), first computing means (71) for computing a change rate of the rotating speeds in predetermined rotational phase positions of the crankshaft (10) based on the rotating speed detected by the detecting means (65), and means (71) for determining an occurrence of the misfire in the engine (1) based on comparison of said change rate computed by the first computing means (71) with a predetermined reference value (KLFAF),
**characterized by**:
second computing means (71) for computing a change of amount of the fuel (QFIN-QFINAVE) to be injected from the injection nozzle (7); and
means (71) for correcting said reference value (KLFAF) used to determine the misfire based on the change of amount of the fuel computed by the second computing means (71).

2. The apparatus according to claim 1, **characterized by that** said first computing means (71) computes one of a difference between and a ratio of the rotating speeds in predetermined rotational phase positions of the crankshaft (10) to compute as said change rate, and wherein said determining means (71) compares one of the difference between and the ratio of the rotating speed computed by the first computing means (71) with said reference value to determine the occurrence of the misfire.

3. The apparatus according to claims 1 or 2, **characterized by that** said injection pump (8) includes:
a drive shaft (8a) capable of rotating in synchronism with the rotation of the crankshaft (10);
cam means (24, 25) driven in synchronism with the rotation of the drive shaft (8a) for discharging the fuel;
adjusting means (16) controlled by the control means (71) to adjust the timing for terminating the discharge of fuel, the amount of the fuel discharged from the injection pump (8) to the injection nozzle (7) being determined based on said timing; and
said detecting means (65) including a rotating body (48) secured to the drive shaft (8a) for an integral rotation therewith and pulse outputting means (49) opposed to the rotating body (48), said rotating body (48) having indicia (48a) located thereon at predetermined intervals, said pulse outputting means (49) outputting a single pulse signal in association with each of the indicia (48a) moving according to the rotation of the rotating body (48), wherein time period between the adjacent pulse signals is associated with the rotating speed of the crankshaft (10).

4. The apparatus according to claim 3, **characterized by that** said adjusting means includes an electromagnetic spill valve (16).

5. The apparatus according to any one of the preceding claims, **characterized by that** said predetermined rotational phase positions of the crankshaft (10) include a first position and a second position, wherein said first position corresponds to a top dead center of a piston (9), and wherein said second position is offset by 90 degrees with respect to the first position.

6. The apparatus according to any one of the preceding claims, **characterized by** means (51) for warning the occurrence of the misfire based on the determination of the determining means (71).

7. The apparatus according to any one of the preceding claims, **characterized by** means (75) for storing the data indicative of the occurrence of the misfire based on the determination of the determining means (71).

## Patentansprüche

1. Gerät zur Erfassung einer Fehlzündung einer elektronisch gesteuerten Dieselkraftmaschine (1), wobei die Kraftmaschine (1) eine Kurbelwelle (10), einen Brennraum (2), eine Einspritzdüse (7) zur Einspritzung von Kraftstoff in den Brennraum (2) und eine Einspritzpumpe (8) beinhaltet, welche durch die Kurbelwelle (10) angetrieben wird und zur Unter-Druck-Setzung des Kraftstoffs und zur Abgabe des Kraftstoffs zu der Düse (7) verwendet wird, wobei die Kraftmaschine (1) eine Verbrennung des Kraftstoffs zum Drehen und zum Antreiben der Kurbelwelle (10) ausführt, wobei das Gerät eine Einrichtung (65) zur Erfassung der Drehgeschwindigkeit der Kurbelwelle (10), eine Einrichtung (71) zur Steuerung der Einspritzpumpe (8) zur Einstellung des Maßes des von der Einspritzdüse (7) in den Brennraum (2) einzuspritzenden Kraftstoffs beinhaltet, wobei die Steuereinrichtung (71) die Einspritzpumpe (8) steuert, so dass das Maß des von der Einspritzpumpe (8) zu der Einspritzdüse (7) abzugebenden Kraftstoffs gemäß einem Anstieg der durch die Erfassungseinrichtung (65) erfassten Drehgeschwindigkeit abnimmt, ferner eine erste Berechnungseinrichtung (71) zur Berechnung einer Änderungsrate der Drehgeschwindigkeiten an vorbestimmten Drehphasenpositionen der Kurbelwelle (10) auf der Grundlage der durch die Erfassungseinrichtung (65) erfassten Drehgeschwindigkeit und eine Einrichtung (71) zur Bestimmung eines Auftretens der Fehlzündung in der Kraftmaschine (1) auf der Grundlage eines Vergleichs der durch die erste Berechnungseinrichtung (71) berechneten Änderungsrate mit einem vorbestimmten Bezugswert (KLFAF) beinhaltet,
**gekennzeichnet durch**
eine zweite Berechnungseinrichtung (71) zur Berechnung eines Änderungsmaßes des von der Einspritzdüse (7) einzuspritzenden Kraftstoffs (QFIN-QFINAVE) und
eine Einrichtung (71) zur Korrektur des für eine Bestimmung der Fehlzündung verwendeten Bezugswerts (KLFAF) auf der Grundlage des **durch** die zweite Berechnungseinrichtung (71) berechneten Änderungsmaßes des Kraftstoffs.

2. Gerät nach Anspruch 1, **dadurch gekennzeichnet, dass** die erste Berechnungseinrichtung (71) eine Differenz oder ein Verhältnis zwischen den Drehgeschwindigkeiten an vorbestimmten Drehphasenpositionen der Kurbelwelle (10) zur Berechnung als die Änderungsrate berechnet, und wobei die Bestimmungseinrichtung (71) die Differenz oder das Verhältnis zwischen der Drehgeschwindigkeit, welche oder welches durch die erste Berechnungseinrichtung (71) berechnet ist, und den Bezugswert zur Bestimmung des Auftretens der Fehlzündung vergleicht.

3. Gerät nach Anspruch 1 oder 2, **dadurch gekennzeichnet, dass** die Einspritzpumpe (8) ausgestattet ist, mit
einer zur synchronen Drehung mit der Drehung der Kurbelwelle (10) eingerichteten Antriebswelle (8a),
einer synchron mit der Drehung der Antriebswelle (8a) angetriebenen Nockeneinrichtung (24, 25) zur Abgabe des Kraftstoffs,
einer durch die Steuereinrichtung (71) gesteuerten Einstelleinrichtung (16) zur Einstellung des Zeitverlaufs zur Beendigung der Kraftstoffabgabe, wobei das Maß des von der Einspritzpumpe (8) an die Einspritzdüse (7) abgegebenen Kraftstoffs auf der Grundlage des Zeitverlaufs bestimmt wird, und
wobei die Erfassungseinrichtung (65) einen an der Antriebswelle (8a) befestigten Drehkörper (48) für eine einteilige Drehung mit ihr und eine dem Drehkörper (48) gegenüberliegende Impulsausgabeeinheit (49) beinhaltet, wobei der Drehkörper (48) mit vorbestimmten Intervallen an ihm angeordnete Anzeigeeinheiten (48a) beinhaltet, wobei die Pulsausgabeeinheit (49) ein einzelnes Impulssignal in Verbindung mit einer jeden der sich gemäß der Drehung des Drehkörpers (48) bewegenden Anzeigeeinheiten (48a) ausgibt, wobei eine Zeitperiode zwischen den benachbarten Impulssignalen mit der Drehgeschwindigkeit der Kurbelwelle (10) verknüpft ist.

4. Gerät nach Anspruch 3, **dadurch gekennzeichnet, dass** die Einstelleinrichtung ein elektromagnetisches Überströmventil (16) beinhaltet.

5. Gerät nach einem der vorstehenden Ansprüche, **dadurch gekennzeichnet, dass** die vorbestimmten Drehphasenpositionen der Kurbelwelle (10) eine erste Position und eine zweite Position beinhalten, wobei die erste Position einem oberen Totpunkt eines Kolbens (9) entspricht, und wobei die zweite Position um 90 Grad bezüglich der ersten Position versetzt ist.

6. Gerät nach einem der vorstehenden Ansprüche, **gekennzeichnet durch** eine Einrichtung (51) zur Warnung vor dem Auftreten der Fehlzündung auf der Grundlage der Bestimmung der Bestimmungseinrichtung (71).

7. Gerät nach einem der vorstehenden Ansprüche, **gekennzeichnet durch** eine Einrichtung (75) zur Speicherung von Daten, die das Auftreten der Fehlzündung auf der Grundlage der Bestimmung der Bestimmungseinrichtung (71) angeben.

## Revendications

1. Appareil destiné à détecter un raté d'allumage dans un moteur diesel électronique (1), le moteur (1) comportant un vilebrequin (10), une chambre de combustion (2), une buse d'injection (7) destinée à injecter du carburant dans la chambre de combustion (2), et une pompe d'injection (8) entraînée par le vilebrequin (10) et utilisée pour mettre sous pression et évacuer le carburant vers la buse (7), ledit moteur (1) réalisant la combustion du carburant pour faire tourner et entraîner le vilebrequin (10), ledit appareil comprenant un moyen (65) destiné à détecter la vitesse de rotation du vilebrequin (10), un moyen (71) destiné à commander la pompe d'injection (8) pour ajuster la quantité de carburant devant être injecté à partir de la buse d'injection (7) dans la chambre de combustion (2), ledit moyen de commande (71) commandant la pompe d'injection (8) de sorte que la quantité de carburant devant être évacué de la pompe d'injection (8) vers la buse d'injection (7) diminue conformément à l'augmentation de la vitesse de rotation détectée par le moyen de détection (65), un premier moyen de calcul (71) destiné à calculer un taux de changement des vitesses de rotation dans les positions de phase rotationnelle prédéterminées du vilebrequin (10) sur la base de la vitesse de rotation détectée par le moyen de détection (65), et un moyen (71) destiné à déterminer l'apparition d'un raté d'allumage dans le moteur (1) sur la base de la comparaison dudit taux de changement calculé par le premier moyen de calcul (71) avec une valeur de référence prédéterminée (KLFAF),
**caractérisé par** :
un deuxième moyen de calcul (71) destiné à calculer un changement de quantité du carburant (QFIN-QFINAVE) devant être injecté à partir de la buse d'injection (7) ; et
un moyen (71) destiné à corriger ladite valeur de référence (KLFAF) utilisée pour déterminer le raté d'allumage sur la base du changement de quantité du carburant calculé par le deuxième moyen de calcul (71).

2. Appareil selon la revendication 1, **caractérisé en ce que** ledit premier moyen de calcul (71) calcule l'un parmi une différence entre et un rapport des vitesses de rotation dans les positions de phase rotationnelle prédéterminées du vilebrequin (10) pour calculer ledit taux de changement, et dans lequel ledit moyen de détermination (71) compare l'un parmi la différence entre et le rapport de la vitesse de rotation calculée par le premier moyen de calcul (71) avec ladite valeur de référence pour déterminer l'apparition du raté d'allumage.

3. Appareil selon les revendications 1 ou 2, **caractérisé en ce que** ladite pompe d'injection (8) comprend :
un arbre d'entraînement (8a) capable de tourner en synchronisme avec la rotation du vilebrequin (10) ;
un moyen de came (24, 25) entraîné en synchronisme avec la rotation de l'arbre d'entraînement (8a) pour évacuer le carburant ;
un moyen d'ajustement (16) commandé par le moyen de commande (71) pour ajuster le calage afin d'achever l'évacuation de carburant, la quantité de carburant évacué à partir de la pompe d'injection (8) vers la buse d'injection (7) étant déterminée sur la base dudit calage ; et
ledit moyen de détection (65) comprenant un corps tournant (48) fixé sur l'arbre d'entraînement (8a) pour une rotation solidaire avec celui-ci et un moyen de sortie d'impulsion (49) opposé au corps tournant (48), ledit corps tournant (48) comportant des index (48a) situés sur celui-ci à des intervalles prédéterminés, ledit moyen de sortie d'impulsion (49) délivrant en sortie un signal impulsionnel unique en association avec chacun des index (48a) se déplaçant conformément à la rotation du corps tournant (48), dans lequel la période de temps entre les signaux impulsionnels adjacents est associée à la vitesse de rotation du vilebrequin (10).

4. Appareil selon la revendication 3, **caractérisé en ce que** ledit moyen d'ajustement comprend une soupape de décharge électromagnétique (16).

5. Appareil selon l'une quelconque des revendications précédentes, **caractérisé en ce que** lesdites positions de phase rotationnelle prédéterminées du vilebrequin (10) comprennent une première position et une deuxième position, dans lequel ladite première position correspond à un point mort haut d'un piston (9), et dans lequel ladite deuxième position est décalée de 90 degrés par rapport à la première position.

6. Appareil selon l'une quelconque des revendications précédentes, **caractérisé par** un moyen (51) destiné à prévenir de l'apparition du raté d'allumage sur la base de la détermination du moyen de détermination (71).

7. Appareil selon l'une quelconque des revendications précédentes, **caractérisé par** un moyen (75) destiné à mémoriser les données indicatives de l'apparition du raté d'allumage sur la base de la détermination du moyen de détermination (71).
